# EUROPÄISCHE PATENTSCHRIFT

(11) **EP 0 757 533 B1**
(45) Veröffentlichungstag und Bekanntmachung des Hinweises auf die Patenterteilung: **09.06.1999**
(21) Anmeldenummer: 95919991.0
(22) Anmeldetag: 28.04.1995
(51) Int. Cl.: A47J 43/07

(54) **KÜCHENMASCHINE**
FOOD PROCESSOR
ROBOT MENAGER

(30) Priorität: 28.04.1994 DE 4414822
(43) Veröffentlichungstag der Anmeldung: 12.02.1997
(60) Teilanmeldung: 98105617.9
(73) Patentinhaber: Vorwerk & Co. Interholding GmbH, 42275 Wuppertal (DE)
(72) Erfinder: DÖRNER, Stefan, D-42697 Solingen (DE); KEMKER, Uwe, D-42105 Wuppertal (DE); LAPP, Oliver, D-42287 Wuppertal (DE); SIMM, Hans Peter, D-42349 Wuppertal (DE)
(74) Vertreter: Grundmann, Dirk, Dr.
(86) Internationale Anmeldenummer: EP9501634
(87) Internationale Veröffentlichungsnummer: WO9529618

(56) Entgegenhaltungen:
- AT-B- 364 479
- DE-A- 2 936 804
- DE-A- 3 507 276
- US-A- 4 702 162

## Beschreibung

Die Erfindung betrifft eine Küchenmaschine, mit einem Rührgefäß und einem Antrieb für ein Rührwerk in dem Rührgefäß, wobei das Rührgefäß in seinem unteren Bereich einen kreisförmigen Öffnungsquerschnitt aufweist.

Eine solche Küchensmaschine ist bspw. aus der DE-A-35 07 276 bekannt. Man bezeichnet diese Küchenmaschine auch als Thermomixer. Der untere Bereich des Rührgefäßes ist mittels einer in einer in der Küchenmaschine ausgebildeten Rührgefäßaufnahme, in welche das Rührgefäß einsetzbar ist, integrierten Heizung aufheizbar. Es können so nicht nur Speisen durch Mixen bzw. Zermahlen zubereitet werden, sondern es ist möglich, zusätzlich eine Garbehandlung durchzuführen.

Bei einer Küchensmaschine, wie sie eingangs als bekannt vorausgesetzt worden ist, besteht neben dem Bedürfnis, in dem Rührgefäß eine vergleichbar große Menge aufnehmen zu können, auch das Bestreben, das Rührgefäß möglichst so auszubilden, daß es zu einer guten Durchmischung des gerührten oder gemixten bzw. zermahlenen Rührgutes in dem Rührgefäß kommt. Es ist in diesem Zusammenhang bereits bekannt, daß das Rührgefäß sich nach oben erweitert. Auch sind bei derartigen Gefäßen bereits mehrere Verwirbelungsrippen am Umfang ausgebildet worden. Der Erfindung liegt das technische Problem zugrunde, eine Küchenmaschine, wie sie eingangs beschrieben ist, gebrauchsgünstiger auszubilden.

Diese technische Problematik ist zunächst beim Gegenstand des Anspruches 1 gelöst, wobei darauf abgestellt ist, daß in einem oberen Bereich der horizontale Öffnungsquerschnitt des Rührgefäßes ellipsenförmig ist und daß der geometrische Mittelpunkt des oberen Öffnungsquerschnittes in Richtung einer horizontalen Achse seitlich versetzt ist gegenüber dem geometrischen Mittelpunkt des unteren Öffnungsquerschnittes.

Durch diese Formänderung des Innenraumes des Rührgefäßes über die Höhe des Rührgefäßes wird eine gute Durchmischung des Mixgutes bzw. Rührgutes erreicht. Es bilden sich Zonen stärkerer und geringerer Bewegung des Rührgutes aus.

Üblicherweise besitzt ein solches Rührgefäß an einer Seite einen Halterungsgriff. Es ist hierbei nun bevorzugt, daß der Mittelpunkt des oberen öffnungsquerschnittes von dem Halterungsgriff weiter entfernt ist als der Mittelpunkt des unteren Öffnungsquerschnittes. Dies bedeutet, daß der Öffnungsbereich des Rührgefäßes eine gewisse Ausladung aufweist in einer Richtung, welche durch eine Achse durch den Mittelpunkt der Öffnungsquerschnitte und den Handgriff vorgegeben ist, wobei diese Ausladung sich von dem Handgriff weg erstreckt.

Weiter ist auch bevorzugt, daß drei unterschiedliche Bereiche über eine Höhe des Rührgefäßes an diesem zu unterscheiden sind. Zunächst ein unterer, im wesentlichen zylindrischer Bereich, an welchen ein mittlerer Bereich mit im wesentlichen konischen Seitenflächen anschließt, und ein oberer Bereich, dessen Öffnungsquerschnitt ellipsenartig ist. Der zylindrische Bereich kann jedoch auch gering konisch ausgebildet sein, bspw. in einem Winkel von ca. 1,6°. Hierbei kann der Übergang von dem kreisförmigen in den ellipsenartigen Öffnungsquerschnitt bereits in dem mittleren Bereich ansetzen.

Im einzelnen kann die Geometrie des Rührgefäßes hierbei auch so beschaffen sein, daß eine Wandung des Rührgefäßes in einem Vertikalschnitt in Versetzungsrichtung des Mittelpunktes des Querschnittes gekrümmt verläuft, auf der gegenüberliegenden Seite, der Handgriffseite, jedoch gerade, - wenn auch sich nach oben erweiternd.

Zwar ist die beschriebene Geometrie der Innenfläche des Rührgefäßes schon für sich vorteilhaft im Hinblick auf die angestrebte gute Durchmischung des Rührgutes. Zur weiteren Verbesserung ist jedoch vorgesehen, daß eine Innenwandflache des Rührgefäßes in einem horizontalen Querschnitt eine nach innen vorspringende Stufe ausbildet. Diese Stufe kann insbesondere anderseitig flach auslaufend in die Wandung des Rührgefäßes übergehen. An der steilen Seite der Stufe kann im einzelnen noch ein einer Abfaserung entsprechender Übergang ausgebildet sein. Diese Stufe ist bevorzugt in dem mittleren und oberen Bereich des Rührgefäßes vorgesehen. Insgesamt hat die Stufe damit eine sich über eine oder zwei Bereiche des Rührgefäßes erstreckende keilartige Struktur. Diese Stufe ist auch weiter bevorzugt nur einseitig in dem Rührgefäß ausgebildet. Insoweit ist das Rührgefäß also unsymmetrisch gestaltet.

Üblicherweise ist ein derartiges Rührgefäß auch mit einem Rührgefäßdeckel versehen. Weiter ist in der Küchenmaschine eine Rührgefäßaufnahme für das Rührgefäß ausgebildet. Bei der hier beschriebenen Küchenmaschine wird der untere, bevorzugt auch im wesentlichen zylindrische Bereich des Rührgefäßes in die Rührgefäßaufnahme eingesetzt.

Ein Rührgefäßdeckel kann bspw. derart auf dem Rührgefäß angeordnet sein, daß der Deckel handgriffseitig in der verriegelten Stellung durch den Verriegelungshebel gefangen ist und an der dem Handgriff gegenüberliegenden Seite mit dem Rührgefäß verhakt ist. Hierzu kann vorgesehen sein, daß der Rührgefäßdeckel einen, mit einem Schlitz versehenen Steg und das Rührgefäß eine Zunge aufweist, wobei bei aufgesetztem Rührgefäßdeckel die Zunge in den Schlitz eingreift. Zum Aufsetzen des Rührgefäßdeckels wird dieser auf das Rührgefäß gehebelt derart, daß die Zunge, welche auch als Ausgießnase ausgeformt sein kann, in den Schlitz des Rührgefäßdeckelseitigen Steges eingreift. Hiernach erfolgt ein Verschwenken des Rührgefäßdeckels in Richtung auf den Rührgefäßhandgriff, in welchem Bereich eine Verriegelung des Deckels mittels des Kupplungs-Verriegelungshebels erfolgen kann. Weiterhin betrifft die Erfindung auch einen Gareinsatz, der in dem Rührgefäß, überfangen von dem Rührgefäßdeckel, anordbar ist. Der Gareinsatz ist bevorzugt im einzelnen derart ausgebildet, daß er eine im wesentliche konische oder zylindrische Wandung aufweist und einen sich im wesentlichen rechtwinklig zu der Wandung erstreckenden Kragen. Sowohl die Wandung wie auch der Kragen weisen Durchbrechungen auf, so daß in dem Rührgefäß erzeugte Dämpfe, insbesondere durch Aktivierung der Heizung, etwa in dem Gareinsatz befindliches Gargut durchziehen können. Bevorzugt ermöglichen diese Durchbrechungen auch ein Umspülen von Speisen (z. B. Reis) mit kochendem Wasser oder ähnlichem. Die Durchbrechungen in der Wandung sind insbesondere auch dazu vorteilhaft, daß bei eingesetztem Gareinsatz ein Ausschenken von in dem Rührgerät befindlicher Flüssigkeit durch das Gargefäß hindurch gebrauchsgünstig möglich ist, da eben auch der angesprochene Kragen aufgrund der Öffnungen durchströmbar ist. Bei einem Ausschenken von Flüssigkeiten werden darin enthaltene feste Bestandteile wirkungsvoll von dem Gareinsatz zurückgehalten. Weiter kann der Gareinsatz auch vor einem Zerkleinern von z. B. Früchten in den Rührtopf eingesetzt werden. Dies führt zu einer gesteigerten Saftausbeute, da die Früchte nicht in den oberen Teil des Rührtopfes gelangen können und so intensiver durch die Messer bearbeitet werden. Weiter ist auch bevorzugt an dem Gareinsatz ein Haken oder ein Stange, welche hintergreifbar ist, ausgebildet. So ist es möglich, den Gareinsatz, der weiter in dem Rührgefäß nicht verriegelt ist, durch einen Niederhalter oder dgl. zu halten, während ein Ausschenken aus dem Rührgefäß bei eingesetztem Gareinsatz erfolgt. Der angesprochene Kragen besitzt eine ellipsenartig begrenzte Grundflache, während die wandung des Gareinsatzes bevorzugt einen im wesentlichen kreisförmigen Öffnungsquerschnitt aufweist. Ein Mittelpunkt der Ellipse der Kragengrundfläche ist hierbei in vergleichbarer Weise wie zuvor im Hinblick auf die Geometrie des Rührgefäßes an sich beschrieben, gegenüber einem Mittelpunkt der Wandung des Gareinsatzes bzw. eines - auch im wesentlichen bevorzugt kreisförmigen - Bodens des Greinsatzes versetzt. Im einzelnen ist die Versetzung richtungsmäßig in gleicher Weise bevorzugt vorgesehen wie weiter oben im Hinblick auf das Rührgefäß beschrieben.

Nachstehend ist die Erfindung des weiteren anhand der beigefügten Zeichnung, die jedoch lediglich Ausführungsbeispiele darstellt, erläutert. Hierbei zeigt:
- Fig. 1: eine Seitenansicht der Küchenmaschine bei eingesetztem Rührgefäß;
- Fig. 2: eine Draufsicht auf die Küchenmaschine gemäß Fig. 1;
- Fig. 3: eine Stirnansicht der Küchenmaschine gemäß Fig. 1 bzw. Fig. 2;
- Fig. 4: eine Draufsicht auf den Rührgefäßdeckel;
- Fig. 5: eine Seitenansicht des Rührgefäßdeckels, eine erste Ausführungsform betreffend;
- Fig. 6: eine Stirnansicht des Rührgefäßdeckels;
- Fig. 7: eine Unteransicht des Rührgefäßdeckels;
- Fig. 8: einen Querschnitt durch den Rührgefäßdeckel;
- Fig. 9: einen Querschnitt durch den Rührgefäßdeckel in einer in bezug auf die Darstellung gemäß Fig. 8 um 90° versetzten Ebene;
- Fig. 10: eine Einzelheit des Rührgefäßdeckels;
- Fig. 11: eine weitere Einzelheit des Rührgefäßdeckels;
- Fig. 12: eine erste Ausführungsform des Rührgefäßes in einer Seitenansicht;
- Fig. 13: eine Stirnansicht des Rührgefäßes;
- Fig. 14: eine Draufsicht auf das Rührgefäß;
- Fig. 15: eine Unteransicht des Rührgefäßes;
- Fig. 16: eine Schnittdarstellung des Rührgefäßes gemäß Fig. 12 mit aufgesetztem Rührgefäßdeckel;

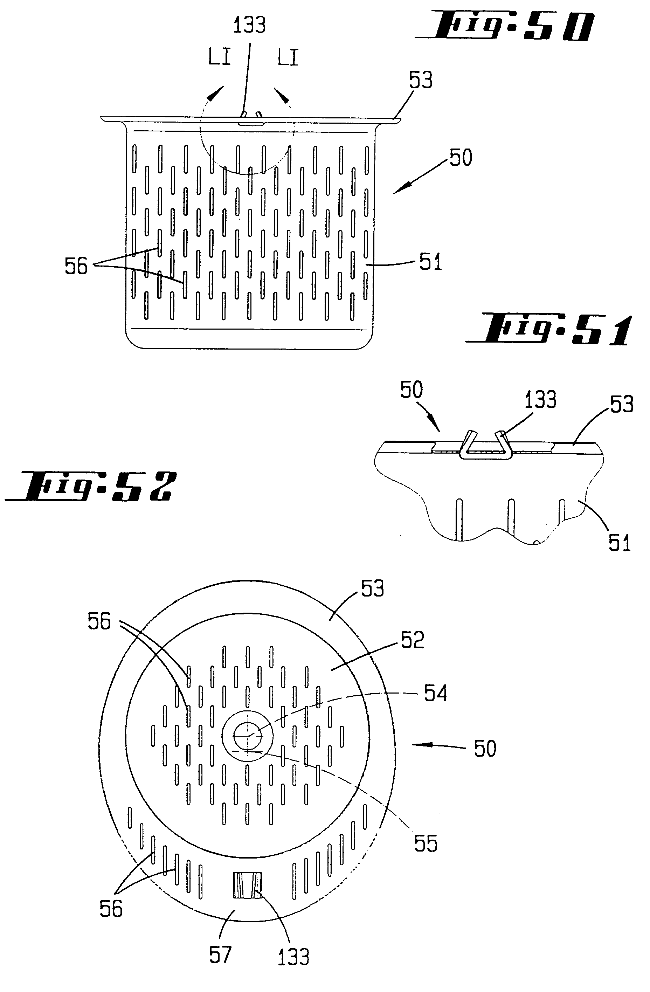

- Fig. 17: eine Schnittdarstellung gemäß Fig. 16, mit eingesetztem Sahnerührer, einer ersten Ausführungsform;
- Fig. 26: eine Seitenansicht einer ersten Ausführungsform des Gareinsatzes;
- Fig. 27: eine Stirnansicht des Gareinsatzes;
- Fig. 28: eine Draufsicht auf den Gareinsatz;
- Fig. 29: eine Schnittdarstellung des Gareinsatzes gemäß Fig. 27, geschnitten entlang der Linie XXIX-XXIX;
- Fig. 30: eine Schnittdarstellung des Gareinsatzes gemäß Fig. 28, geschnitten entlang der Linie XXX-XXX;
- Fig. 31: eine Querschnittsdarstellung des Rührgefäßes gemäß Fig. 16 und des eingesetzten Gareinsatzes, bei weiter aufgesetztem Rührgefäßdeckel;
- Fig. 32: eine Draufsicht auf die Rührgefäßaufnahme;
- Fig. 33: eine Schnittdarstellung der Rührgefäßaufnahme bei eingesetztem Rührgefäß, im Bereich eines Aufnahmeablaufes;
- Fig. 50: eine der Fig. 27 entsprechende Stirnansicht eines Gareinsatzes, eine zweite Ausführungsform betreffend;
- Fig. 51: eine Detaildarstellung aus der Fig. 50, den Bereich LI-LI betreffend, teilweise geschnitten;
- Fig. 52: eine Draufsicht auf den Gareinsatz gemäß Fig. 50;
- Fig. 53: eine der Fig. 5 entsprechende Seitenansicht eines Rührgefäßdeckels in einer zweiten Ausführungsform;
- Fig. 54: eine Seitenansicht des Gareinsatzes gemäß den Fig. 50 bis 52;
- Fig. 55: eine der Fig. 12 entsprechende Seitenansicht des Rührgefäßes, teilweise geschnitten;

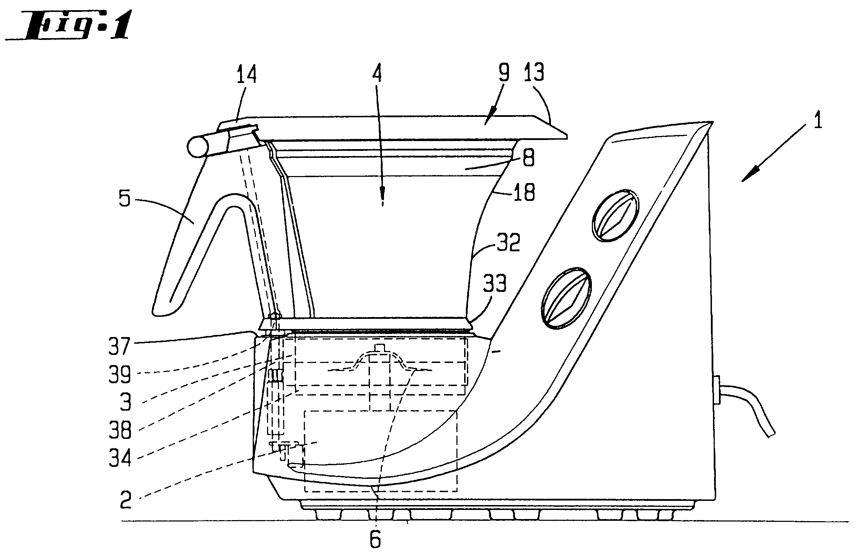

Dargestellt und beschrieben ist - zunächst mit Bezug zu Fig. 1 - eine Küchenmaschine 1, die einen in weiterer Einzelheit nicht dargestellten Rühwerksantrieb 2 in Form eines Elektromotors aufweist. In einer Rührgefäßaufnahme 3 ist ein Rührgefäß 4 aufgenommen, der einen Handgriff 5 aufweist.

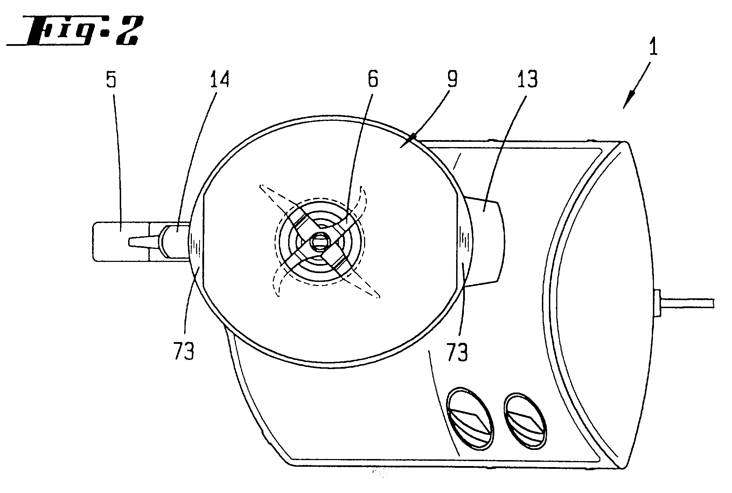

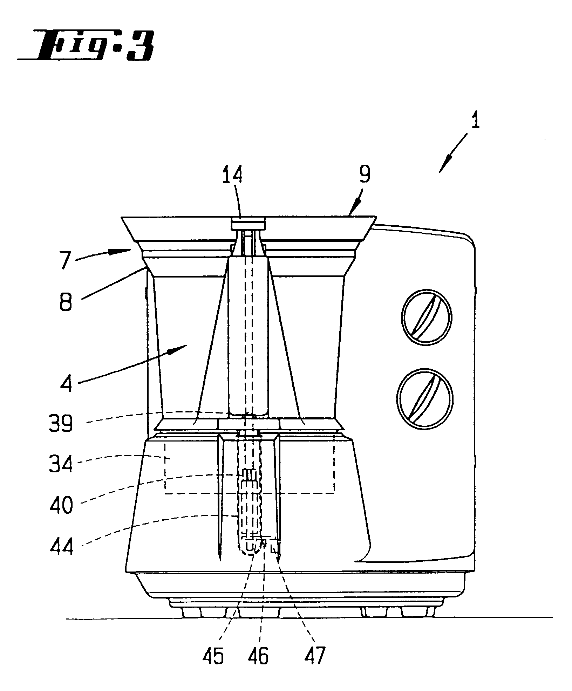

Wie aus der Draufsicht gemäß Fig. 2 zu ersehen ist, befindet sich in dem Rührgefäß 4 ein Messerwerk 6. Das Messerwerk 6 kann auch ausgewechselt und gegen ein anderes Messerwerk ersetzt werden.

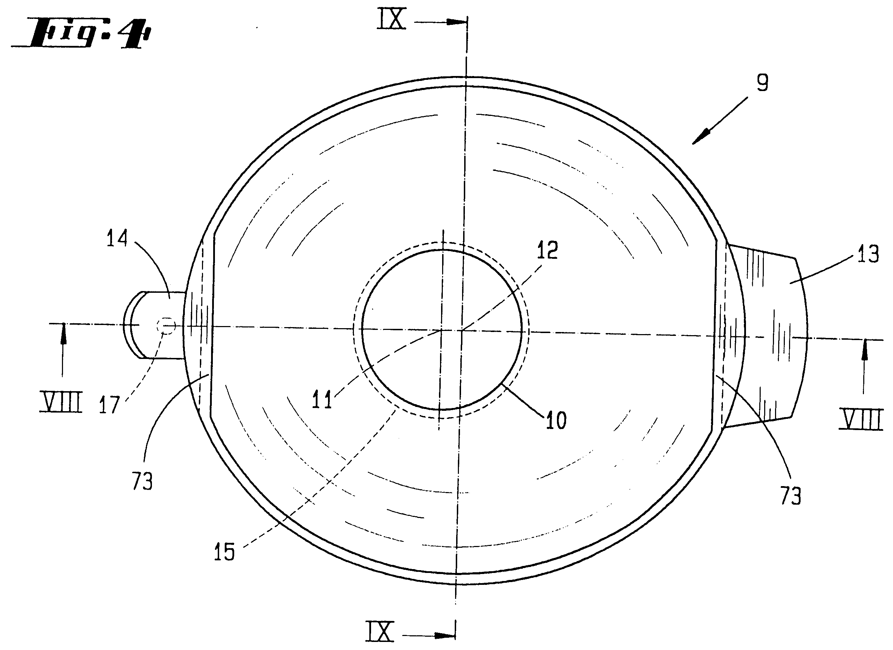

Aus der Darstellung gemäß Fig, 1 aber auch aus der Stirnansicht gemäß Fig. 3 ist zu ersehen, daß das Rührgefäß 4 sich zugeordnet zu seinem oberen Rand 7 mit einem konischen Absatz 8 erweiternd ausgebildet ist.

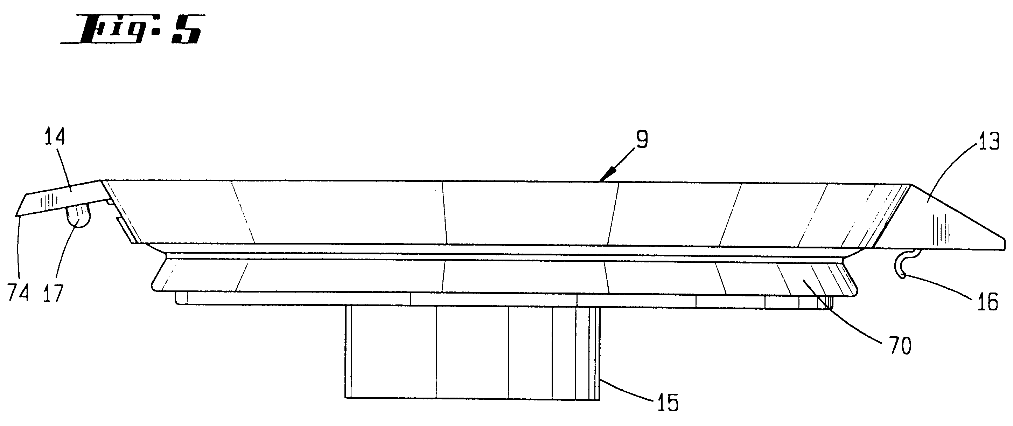

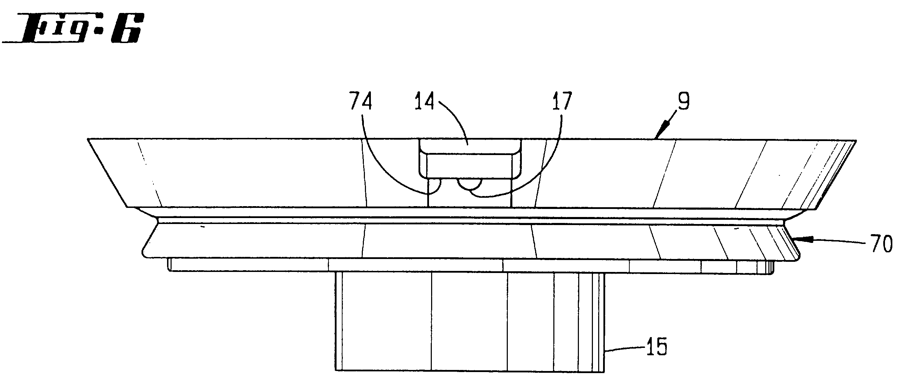

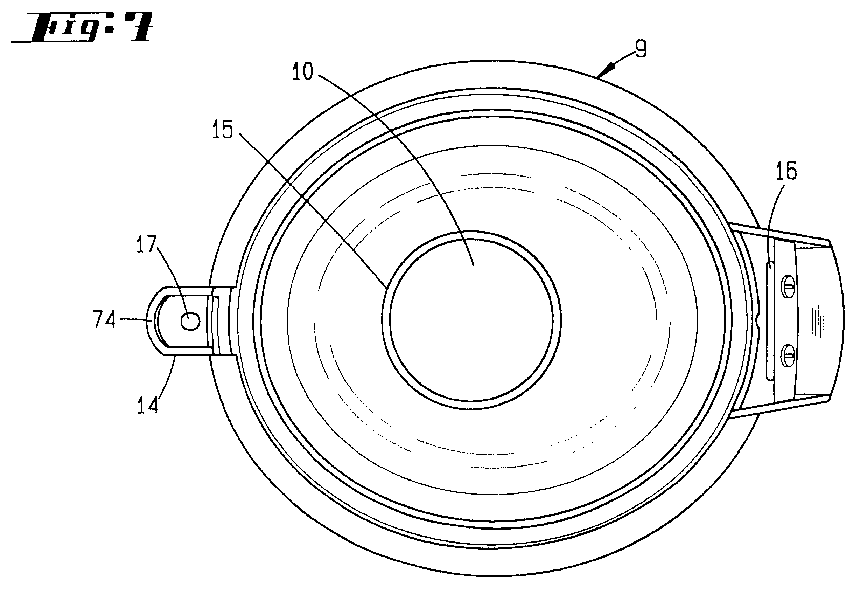

Ein Rührgefäßdeckel 9 ist in Fig. 4 in der Draufsicht dargestellt. Er weist eine im wesentlichen kreisförmige Öffnung 10 auf. Die kreisförmige Öffnung 10 besitzt einen Mittelpunkt 11, der gegenüber einem geometrischen Mittelpunkt 12 des Rührgefäßdeckels 9 versetzt ist. Der Rührgefäßdeckel 9 besitzt eine ellipsenartige Grundfläche. An den Enden des Rührgefäßdeckels 9, welche der größeren Achse der Grundfläche zugeordnet sind, ist einseitig eine Handhabe 13 ausgebildet und gegenüberliegend eine Vorsprungshalterung 14, die nachstehend noch im einzelnen erläutert ist. Wie aus der Seitenansicht gemäß Fig. 5 auch ersichtlich ist, ist unterseitig an der Handhabe 13 ein Verriegelungshaken 16 ausgebildet, der in eine entsprechende Verriegelungsöffnung in dem Rührgefäß 4 im aufgesetzten Zustand des Rührdeckels auf das Rührgefäß eingreift. Weiter ist auch ersichtlich, daß sich an die Öffnung 10 ein nach unten, im aufgesetzten Zustand in das Innere des Rührgefäßes 4 ragender zylindrischer Fortsatz 15 anschließt. Die Vorsprungshalterung 14 weist einen nach unten ragenden Zapfen 17 auf. Dieser wirkt mit der Sicherungseinrichtung zusammen, wie nachstehend noch im einzelnen erläutert.

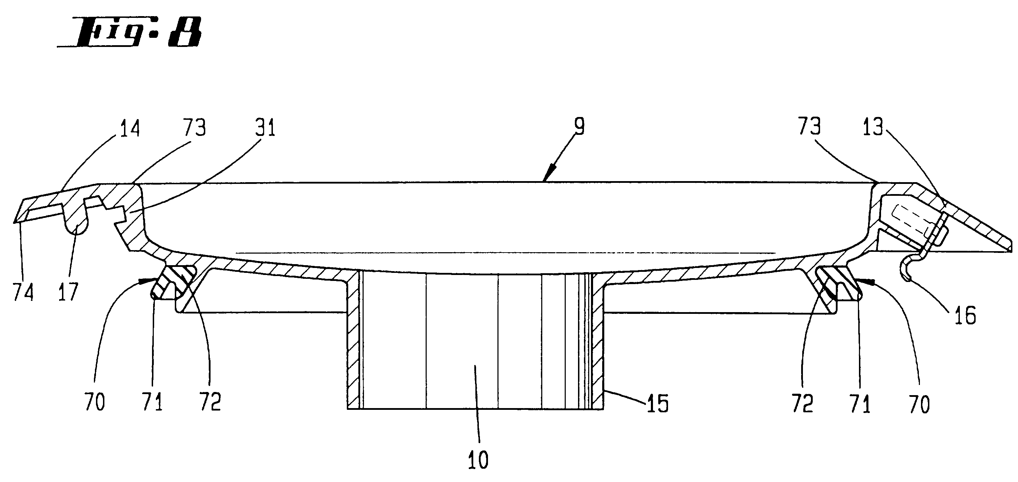

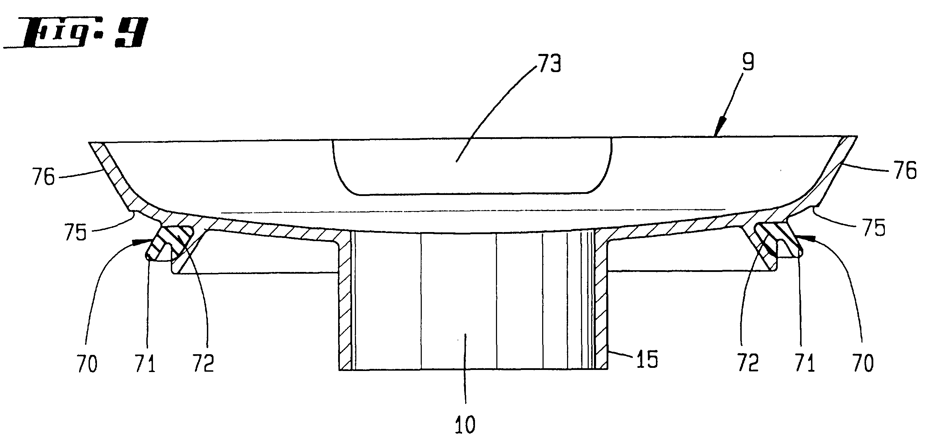

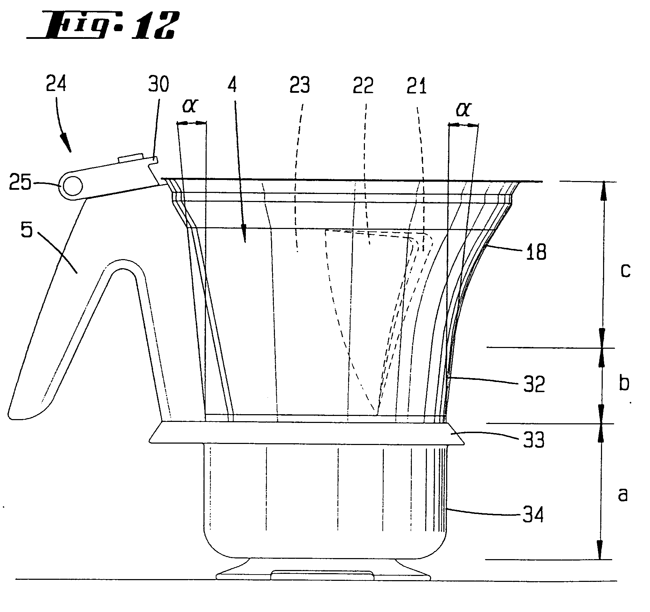

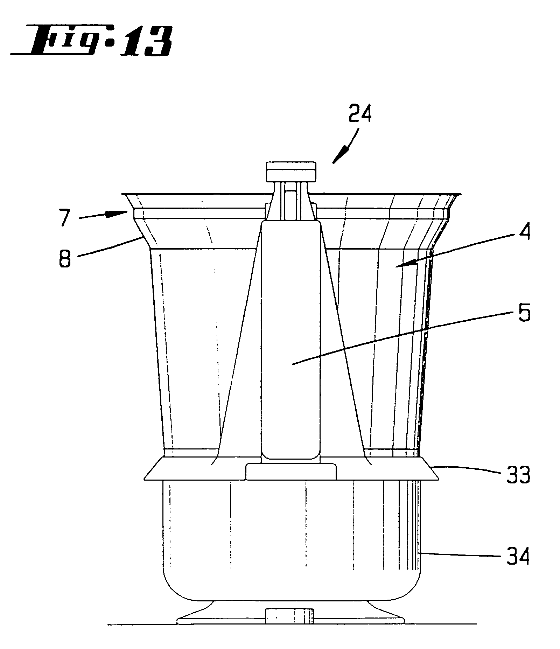

Fig. 6 zeigt die Stirnansicht des Rührgefäßdeckels 9, auf der Seite der Vorsprungshalterung 14. Aus der Zusammenschau der Fig. 5 und 6 ist im einzelnen ein umlaufender Zentrierungsrand 70 zu erkennen, der im eingesetzten Zustand sich im Inneren des Rührgefäßes 4 befindet. Aus Fig. 8 ist weiter im einzelnen zu erkennen, daß der Zentrierungsrand 70 aus einem - weicheren - Kunststoff besteht, der entweder im Zweikomponentenverfahren angespritzt oder als Ring an die Struktur des Rührwerkdeckels 9 angelegt bzw. in die dargestellte Aussparung eingesetzt ist. Im einzelnen weist der Zentrierungsrand 70 eine vorspringende Lippe 71 auf, welche bezüglich eines Massivbereiches 72 des Zentrierungsrandes 70 V-förmig vorspringt. Steht an der Dichtung eine Flüssigkeit an, so drückt diese gegen die Innenseite der Dichtlippe 71, so daß hierdurch die Andrückkraft gegen das Rührgefäß 4 verstärkt wird.

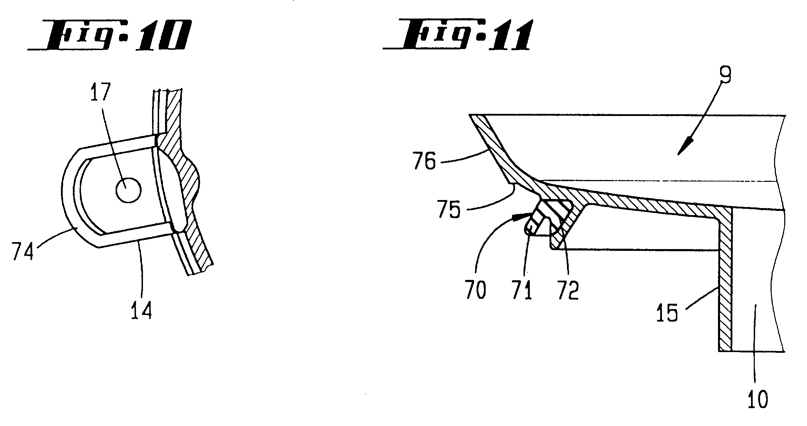

Aus der in Fig. 7 dargestellten Unteransicht des Rührgefäßdeckels 9 ist zu ersehen, daß der Zentrierungsrand 70 in geometrisch gleicher Weise, jedoch verkleinert, entsprechend der Grundfläche des Rührgefäßdeckels 9 auch verläuft. Er ist damit auch angepaßt an einen Öffnungsquerschnitt des Rührgefäßes 4 im oberen Bereich, wie nachstehend noch im einzelnen erläutert.

Fig. 8 zeigt einen Schnitt durch den Rührwerkdeckel in Richtung der größeren Achse der ellipsenförmigen Grundrißfläche.

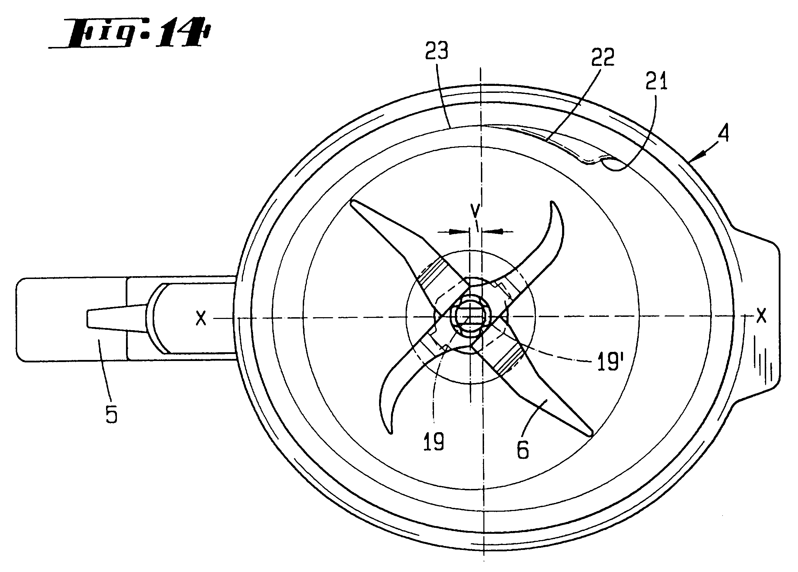

Fig. 9 zeigt einen Querschnitt gemäß der Darstellung gemäß Fig. 8, wobei jedoch die Schnittebene um 90° zu der Schnittebene der Fig. 8 versetzt ist. Wie in Fig. 4 ist auch hier zu erkennen, daß eine an den Schmalseiten ausgebildete - innere - Abschlußfläche 73 gerade verlaufend ausgebildet ist, abweichend von der ansonsten stärker (im Randbereich) bzw. flacher gekrümmten Innenfläche des Rührgefäßdeckels 9.

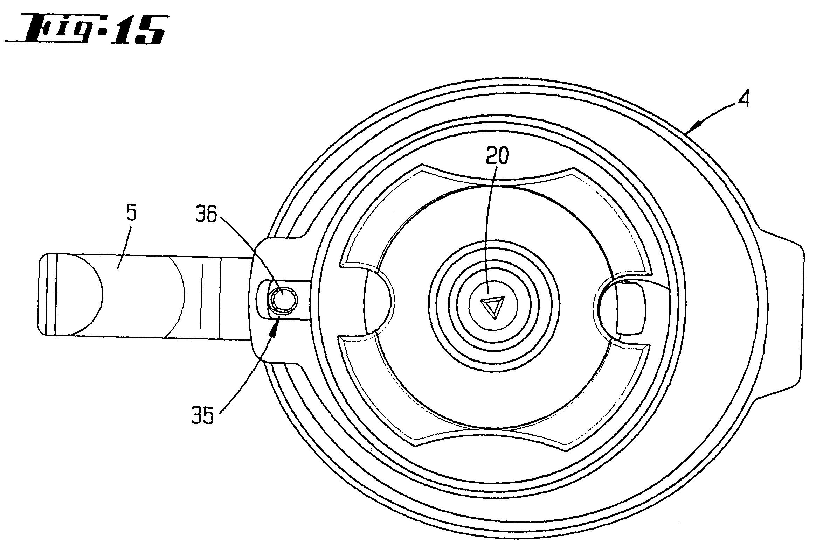

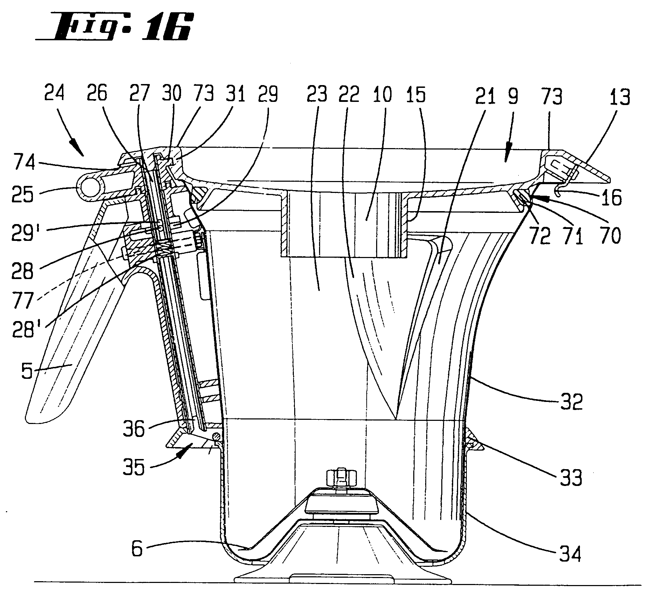

Aus der Einzelheit der Fig. 10 ist der Zapfen 17, der mit der Sicherungseinrichtung, wie sie nachstehend noch im einzeln erläutert ist, zusammenwirkt, ersichtlich. Er ist mittig bezüglich der Vorsprungshalterung 14 angeordnet, wobei diese auch eine nach unten, in Richtung des Zapfens 17 ragende Vorsprungskante 74 ausbildet.

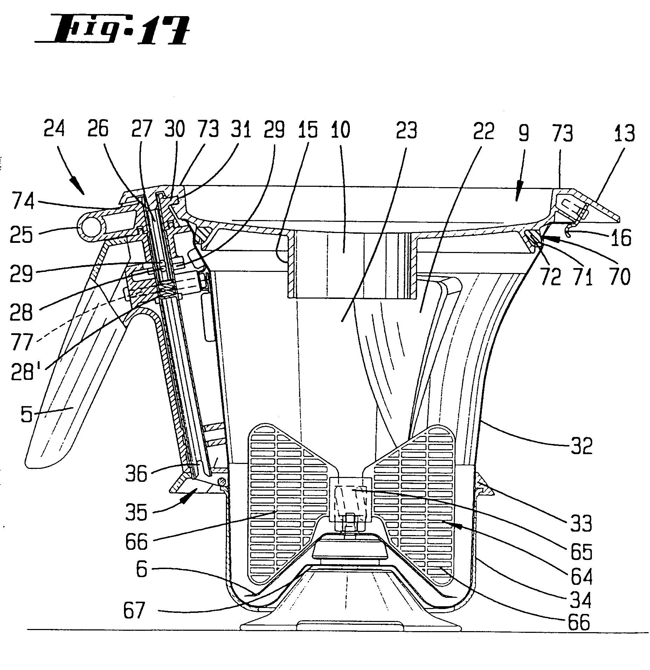

Aus der Einzel-Querschnittsdarstellung der Fig. 11 ist insbesondere auch ein Aufsetzrand 75 zu erkennen, welcher unterseitig an den oberen, außenflächig in Fortführung des Rührgefäßes 4 anschließende Deckelrand 76 ausgebildet ist.

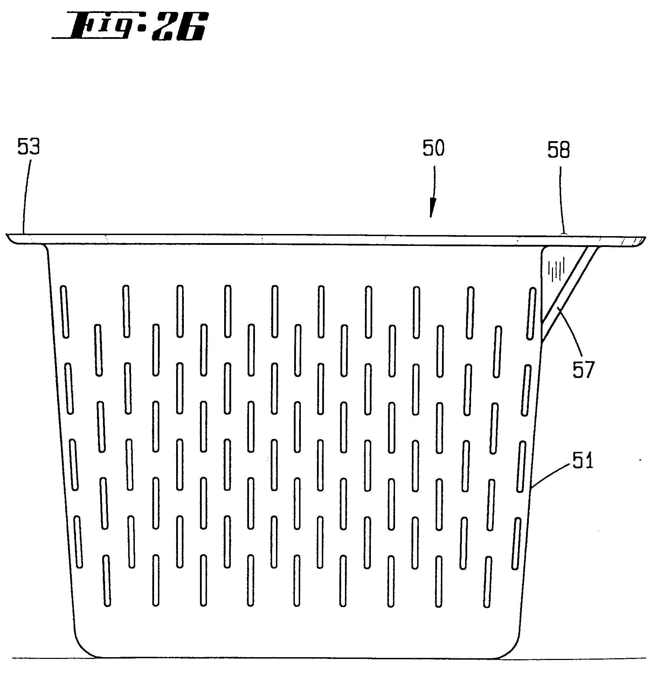

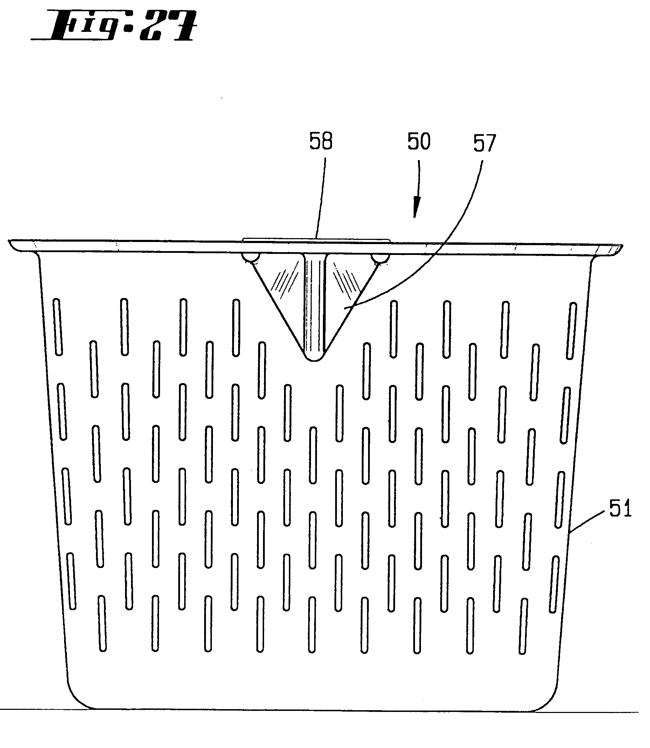

Aus der Seitendarstellung des Rührgefäßes 4 gemäß Fig. 12 ist ersichtlich, daß das Rührgefäß 4 im wesentlichen in drei Bereiche a, b und c aufgeteilt werden kann. Der untere Bereich a ist im wesentlichen zylindrisch ausgebildet. Der daran anschließende Bereich b ist im wesentlichen konisch ausgebildet. Weiterhin schließt nach oben ein Bereich c an, der eine in Gegenrichtung zu dem Handgriff 5 sich erstreckende Ausladung ausbildet, die zu einer gekrümmten vorderen - an der dem Handhebel 5 entgegengesetzten Seite - Konturlinie 18 führt. Diese Konturlinie 18 entspricht auch einer inneren Konturlinie.

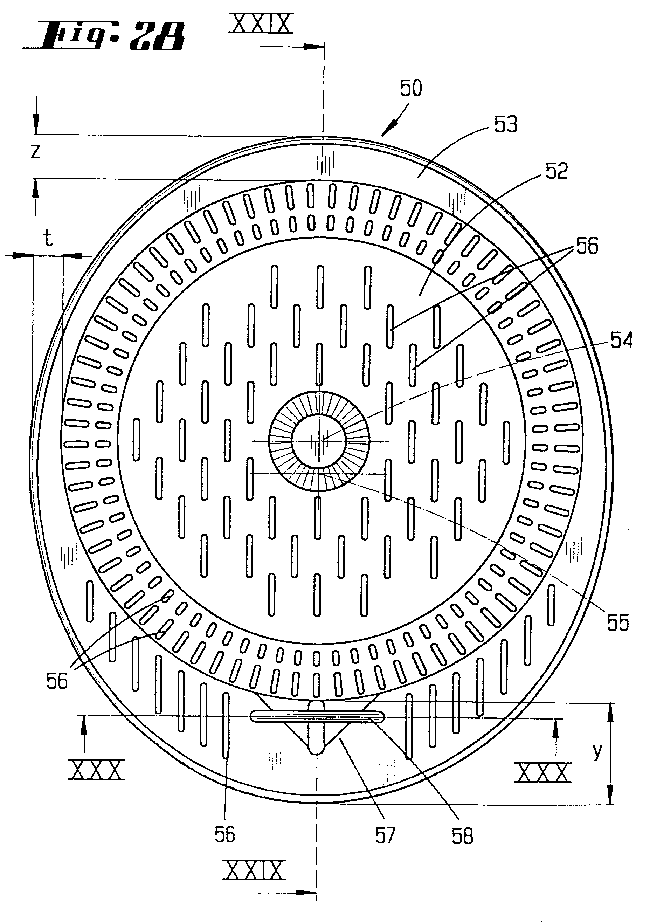

Die Stirnansicht des Rührgefäßes 4 gemäß Fig. 13 zeigt, daß die gekrümmte Konturlinie 18 in den Seitenbereichen des Rührgefäßes 4 nicht ausgebildet ist.

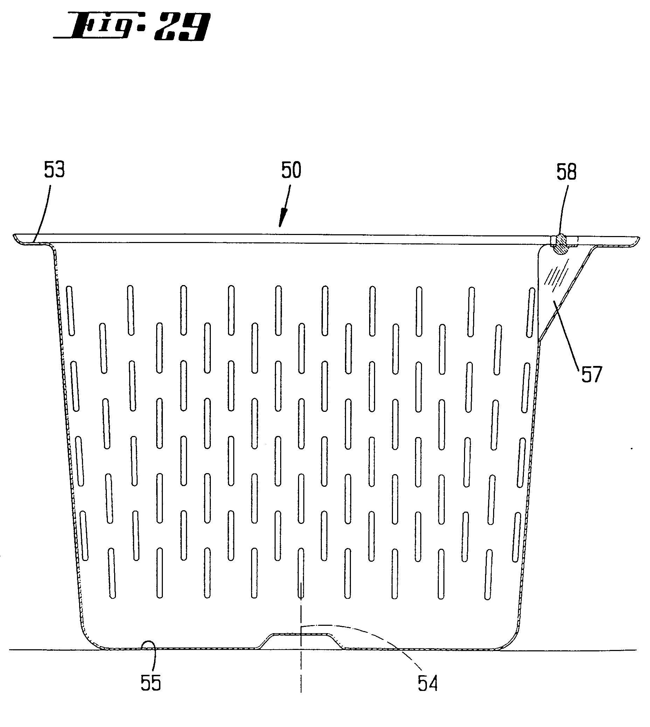

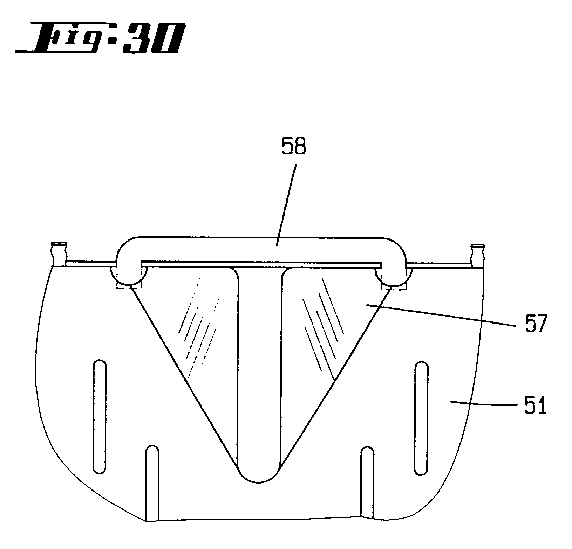

Die Draufsicht gemäß Fig. 14 läßt erkennen, daß ein Mittelpunkt 19 eines kreisförmigen Öffnungsquerschnittes des unteren Bereiches a, der mit einer Drehachse des Messerwerkes zusammenfällt, versetzt ausgebildet ist zu einem Mittelpunkt 19' des ellipsenförmigen oberen Öffnungsquerschnittes des Bereiches c. Die Versetzung v ist in Richtung einer größeren Längsachse x des oberen ellipsenförmigen Öffnungsquerschnittes, wegweisend von dem Handgriff 5, ausgebildet.

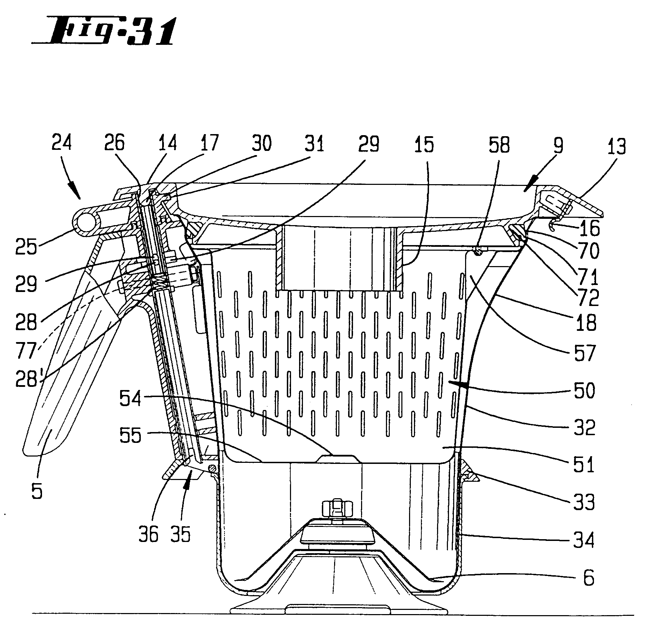

Die Unteransicht gemäß Fig. 15 des Rührgefäßes 4 zeigt insbesondere auch einen sternförmigen Kupplungseinsatz 20 zum Antrieb bspw. des Messersatzes 6.

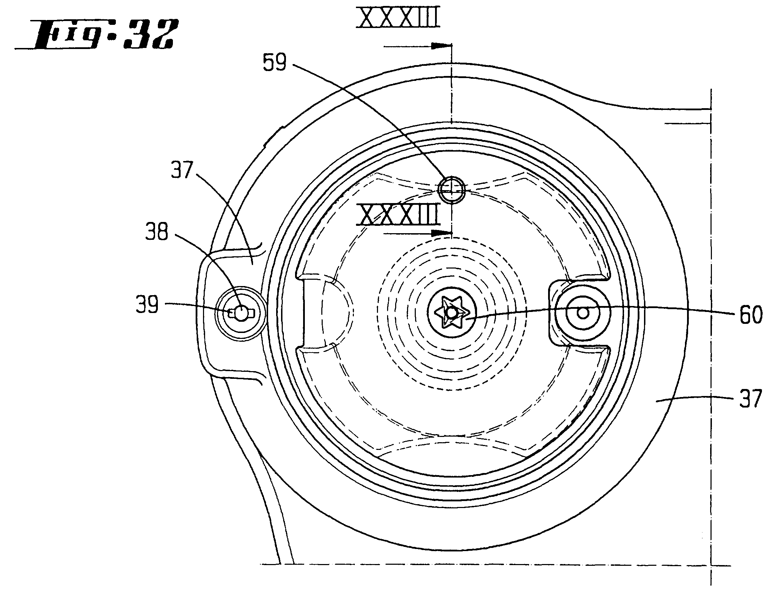

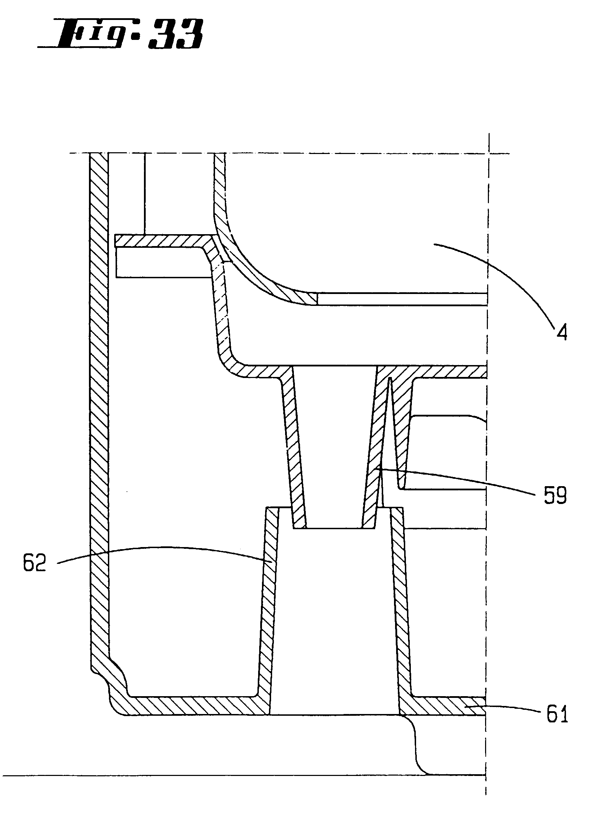

Aus der Querschnittsdarstellung gemäß Fig. 16 ist weiter ersichtlich, daß im Inneren des Rührgefäßes 4 eine nach innen vorspringende Stufe 21 ausgebildet ist. Die Stufe 21 ist Teil einer insgesamt keilförmigen Struktur, die sich im Bereich des mittleren Abschnittes b und des oberen Abschnittes c des Rührgefäßes erstreckt. Die Stufe 21 ist einseitig in dem Rührgefäß ausgebildet, wie sich dies auch insbesondere aus der Darstellung der Fig. 14 ergibt. Die Stufe 21 geht weiter flach auslaufend über eine Fläche 22 in die Innenwandung 23 des Rührgefäßes über. Krümmungsmittelpunkt für die Fläche 22 ist hierbei der Mittelpunkt 19. Die Stufe 21 ist derart vorgesehen, daß sie durch die aufgeprägte Drehbewegung des Rühr- oder Mixgutes überlaufen wird, das Messerwerk oder ein Rühreinsatz also nicht gegen die Stufe 21 anfördert.

Die Stufe 21 ist im übrigen, wie auch aus der zeichnerischen Darstellung ersichtlich, winkelartig ausgebildet, wobei eine obere Stufenfläche etwa am unteren Rand und entlang diesem des Absatzes 8 verläuft. Etwa senkrecht dazu verläuft die weitere Stufenfläche, mit dem gekrümmten Übergang in dem rechten Winkel. Der größte Stufenabsatz ist auch in dem gekrümmten, im wesentlichen rechtwinkligen Übegang zu sehen. Nach unten hin, in dem vertikalen Bereich, verläuft die Stufenfläche insgesamt leicht gekrümmt und derart, daß im Detail kein rechter Winkel, sondern ein spitzer Winkel durch die obere und vertikale Stufenfläche gegeben ist. Nach unten hin verringert sich der Stufenabsatz auch zunehmend, bis er etwa im Bereich einer oberen Begrenzung des Bereichs a des Rührgefäßes 4 ausläuft. Insgesamt erstreckt sich die obere, wandparallele bzw. in der Kreisform der Wand eingebundene Fläche 22 etwa über eine Viertelkreisfläche des Rührgefäßes 4.

In dem Handgriff 5 des Rührgefäßes 4 ist eine Sicherungseinrichtung 24 ausgebildet. Die Sicherungseinrichtung 24 besteht im einzelnen aus einem Handhebel 25, der mit einer als Kupplungsstange ausgebildeten Hülse 26 fest verbunden ist. In der Hülse 26 ist in einem oberen Bereich ein Sicherungsstift 27 aufgenommen. Der Sicherungsstift 27 ist in der Hülse 26 nur vertikal bewegbar, und zwar gegen die Kraft einer Feder 28'.

Der Sicherungsstift 27 wird durch Aufsetzen des Rührgefäßdeckels 9 nach unten gedrückt, und zwar durch den Zapfen 17 (vgl. auch Fig. 8 und 10). Hierdurch wird im einzelnen ein mit dem Sicherungsstift 27 verbundener Sicherungsfortsatz 28 aus einem Langloch 29' der Hülse 26 vertikal nach unten herausbewegt. Der Sicherungsfortsatz 28 gelangt so in eine nutartige, zumindest teilkreisförmig ausgebildete Aussparung 29, so daß eine Verdrehung der Hülse 26 mittels des Handhebels 25 zusammen mit dem Sicherungsstift 27 möglich wird. An dem Handhebel 25 ist weiter eine Sicherungsnase 30 (vgl. auch Fig. 12) ausgebildet, die in eine Sicherungsnut 31 des Rührgefäßdeckels 9 eingreift. Mit einer Verdrehung des Handhebels 25 wird also zugleich der aufgesetzte Rührgefäßdeckel 9 an dem Rührgefäß verriegelt. Ohne ein ordnungsgemäßes Aufsetzen des Rührgefäßdeckels 9 ist aber im Hinblick auf die erforderliche vertikale Bewegung des Sicherungsstiftes 27 eine Verdrehung des Handhebels 25 nicht möglich.

Wesentlich ist, daß der Handhebel 25, der Sicherungsstift 27 und die Hülse 26 außerbalb des eigentlichen Rührgefäßes 4, d.h. außerhalb einer Rührgefäßwandung 32 angeordnet sind. Die Betätigung der Sicherung und zur Ausbildung dieser Sicherung ist eine Durchbrechung der Wandung 32 des Rührgefäßes 4 nicht vorgesehen bzw. erforderlich.

Am Übergang des Bereiches a zu dem Bereich b des Rührgefäßes 4 ist außen an dem Rührgefäß 4 ein umlaufender Aufsetzrand 33 ausgebildet. In dem unteren Bereich der Rührgefäßwandung ist auch noch eine Zweitwandung 34 vorgesehen, welche in dem Aufsetzrand 33 ausläuft. Dieser Aufsetzrand 33 vergrößert sich hinsichtlich seines Durchmessers zu der Seite hin, an welcher der Handgriff 5 ausgebildet ist. Der Aufsetzrand 33 befestigt zugleich auch den Handgriff 5 mit an dem Rührgefäß 4, in dessen unteren Bereich. Im oberen Bereich (vgl. Fig. 16) ist der Handgriff 5 mittels einer Schraubverbindung 77 mit der Rührgefäßwandung 32 schraubverbunden.

Im Detail ist die Befestigung des Handgriffes 5 an dem Rührgefäß 4 derart ausgebildet, da der Handgriff 5, wie zuvor erwähnt, im oberen Bereich mit der Rührgefäßwandung 32 verschraubt und im unteren Bereich an dem Aufsetzrand 33 bspw. durch Einhaken verbunden ist.

Sollten bei eingesetztem Rührgefäß 4 etwaige Speisen oder Flüssigkeiten an diesem außenwandig herunterlaufen, so leitet der Aufsetzrand 33 diese Speisen oder Flüssigkeiten um die Rührgefäßaufnahme 3 herum, so daß eine dort angeordnete Heizung oder ähnliches nicht verschmutzt wird. Dies könnte zu einem "Verbacken" des Rührgefäßes 4 in der Aufnahme 3 führen, wonach ein Abnehmen des Gefäßes 4 aus der Aufnahme zumindest erschwert wird. Vielmehr fließen die abtropfenden Speisen oder Flüssigkeiten am Gehäuse ab.

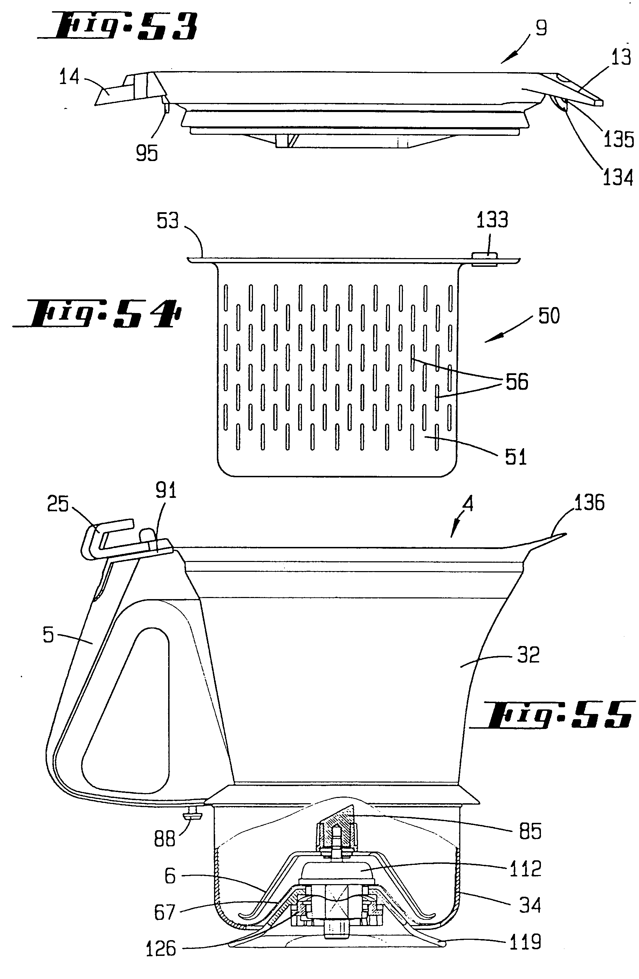

Ein freies Ende 35 der Hülse 26 weist in Höhe des Aufsetzrandes 33 eine Formschlußöffnung 36 auf. Die Formschlußöffnung 36 wirkt mit einem Kupplungsteil 38 in der Rührgefäßaufnahme 3 zusammen. Dieses Kupplungsteil 38 ist in Fig. 18 im oberen Bereich schematisch angedeutet, wobei hier nur gestrichelt ein Ende der Hülse 26 dargestellt ist. Das Kupplungsteil 38 besitzt einen Querzapfen 39, der in die Formschlußausnehmung 36 der Hülse 26 eingreift. Das Rührgefäß ist entsprechend in die Rührgefäßaufnahme 3 nur einsetzbar, wenn sich der Handhebel 25 in einer Stellung entsprechend der Öffnungsstellung befindet.

Das Kupplungsteil 38 ist in axialer Verlängerung mit einem Spreizknebel 40 verbunden.

In den Fig. 26 bis 31 ist ein Gareinsatz 50 dargestellt, der insbesondere vorteilhaft ist bei einer Anwendung im Inneren des Rührgefäßes 4 unterhalb des Rührgefäßdeckels 9.

Der Gareinsatz 50 besitzt eine durchlöcherte, im wesentlichen konische oder gegebenenfalls auch zylindrische Seitenwandung 51 und einen durchlöcherten Boden 52. Weiter besitzt er einen oberen umlaufenden Kragen 53, der eine ellipsenartige Grundfläche aufweist. Hierbei ist in vergleichbarer Weise wie bei dem Rührgefäß 4 die ellipsenartige Grundfläche des Kragens 53 gegenüber einem Mittelpunkt des Bodens 52 versetzt. Als Mittelpunkt des Bodens 52 ist der Punkt 54 anzusehen, als geometrischen Mittelpunkt der ellipsenförmigen Gestalt des Kragens 53 der Punkt 55.

Hierdurch ergibt sich, daß der Kragen 53 an einer Seite - vorderseitig - eine größere Ausladung y aufweist als rückwärtig - z. Die Ausladung seitlich - t ist wiederum kleiner als die rückwärtige Ansladung z.

Im vorderen Bereich des Kragens 53 sind gleichfalls schlitzartige Durchbrechungen 56 ausgebildet, welche auch in der konischen Wandung und im Boden ausgebildet sind. Darüber hinaus besitzt der Gareinsatz in seinem vorderen Bereich eine eingeschnittene Ausgußausformung 57, die von einer Querstange 58 übergriffen ist. Die Querstange 58 kann damit ösenartig wirken, zur Lagerungsaufnahme eines Hakens.

In Fig. 31 ist die Integration des Gareinsatzes in das Rührgefäß dargestellt.

Fig. 32 zeigt eine Draufsicht auf die Rührgefäßaufnahme 3. Diese ist topfartig ausgebildet. In der Rührgefäßaufnahme 3 ist bodenseitig eine Abflußöffnung 59 ausgebildet, zu welcher auch auf Fig. 33 zu verweisen ist. Weiter ist eine sternförmige Kupplungsausnehmung 60 zu erkennen, welche die Motorkraft auf das Rührwerk bzw. den Messersatz 6 überträgt.

In die Kupplungsausnehmung 60 greift der sternförmige Kupplungseinsatz 20 (vgl. Fig. 15) ein. Durch die sternförmig-dreieckige Ausführung der einen Seite der Kupplung und die sternförmig-sechseckige Ausführung der anderen Seite der Kupplung ist die Kupplungsstellung einerseits beim Einsetzen des Rührgefäßes 4 einfach zu erreichen, andererseits ist aber auch eine sichere formschlüssige Kupplungsverbindung gegeben.

Aus der Schnittdarstellung gemäß Fig. 33 ist zu erkennen, daß die Ablauföffnung 59 in eine von einem Boden 61 der Küchenmaschine 1 nach oben ragenden Stutzen 62 eingreift, so daß etwa in die Aufnahme 3 übergelaufene Flüssigkeit oder dgl. durch die Ablauföffnung 59 vollkommen aus der Küchenmaschine 1 herauslaufen kann.

In den Fig. 50 bis 52 ist ein Gareinsatz 50 in einer zweiten Ausführungsform dargestellt. Dieser unterscheidet sich im wesentlichen von dem in den Fig. 26 bis 31 gezeigten ersten Ausführungsbeispiel in der ösenartigen Ausgestaltung zur Lagerungsaufnahme eines Hakens.

Wie insbesondere aus dem Teilschnitt der Fig. 51 ersichtlich, ist hier eine schwalbenschwanzförmige Aufnahmeöse 133 vorgesehen, welche als Blechteil im Bereich der Ansgußformung 57 angeordnet ist. Die Anfnahmeöse 33 ist nach oben hin offen ausgebildet.

Die Durchbrechungen 56 des Gareinsatzes 50 dienen unter anderem dazu, daß Speisen, wie z. B. Reis, mit kochendem Wasser umspült werden. Weiter werden beim Ausschenken von Flüssigkeiten darin enthaltene feste Bestandteile von dem Gareinsatz 50 zurückgehalten.

Wird der Gareinsatz 50 vor dem Zerkleinern von z. B. Früchten mit in den Rührtopf 4 eingesetzt, so führt dies zu einer gesteigerten Saftausbeute, da die Früchte nicht in den oberen Teil des Rührgefäßes 4 gelangen können und so intensiver durch die Messer 110 bearbeitet werden.

In den Fig. 53 bis 55 sind das Rührgefäß 4, der Gareinsatz 50 und der Rührgefäßdeckel 9 in einer zweiten Ausführungsform jeweils in einer Seitenansicht dargestellt. Hier ist zu erkennen, daß der Rührgefäßdeckel 9 anstelle des im ersten Ausführungsbeispiel angeordneten Verriegelungshakens 16 nunmehr einen Steg 34 aufweist. Dieser Steg 134 ist mit einem Schlitz 135 versehen, in welchen eine Zunge 136 des Rührgefäßes 4 bei aufgesetztem Rührgefäßdeckel 9 eingreift. Die Zunge 136 dient nach abgenommenem Rührgefäßdeckel 9 auch als Ausgießnase.

Der aufgesetzte Rührgefäßdeckel ist somit zweifach gesichert, zum einen durch den Eingriff der Zunge 136 in den Schlitz 135 und zum anderen durch ein Überfangen der Vorsprungshalterung 14 mittels eines U-Schenkels des Handhebels 25.

## Patentansprüche

1. Küchenmaschine (1) mit einem Rührgefäß (4) und einem Antrieb (2) für ein Rührwerk (6) in dem Rührgefäß (4), wobei das Rührgefäß (4) in seinem unteren Bereich (a) einen kreisförmigen horizontalen Öffnungsquerschnitt aufweist, dadurch gekennzeichnet, daß der obere horizontale Öffnungsquerschnitt des Rührgefäßes (4) ellipsenförmig ist und daß der geometrische Mittelpunkt (19') des oberen Öffnungsquerschnittes in Richtung einer horizontalen Achse (x) seitlich versetzt ist gegenüber dem geometrischen Mittelpunkt (19) des unteren Öffnungsquerschnittes.

2. Küchenmaschine nach Anspruch 1, wobei an der Seite des Rührgefäßes (4) ein Halterungsgriff (5) ausgebildet ist, dadurch gekennzeichnet, daß der Mittelpunkt des oberen Öffnungsquerschnittes von dem Halterungsgriff (5) weiter entfernt ist als der Mittelpunkt des unteren Öffnungsquerschnittes.

3. Küchenmaschine nach Anspruch 1 oder 2, dadurch gekennzeichnet, daß der Öffnungsquerschnitt in dem unteren Bereich (a) und einem mittleren Bereich (b) des Rührgefäßes (4) kreisförmig ist, in dem oberen Bereich (c) jedoch ellipsenförmig.

4. Küchenmaschine nach einem oder mehreren der vorhergehenden Ansprüche, dadurch gekennzeichnet, daß eine Wandung (23) des Rührgefäßes (4) in einem Vertikalschnitt in Versetzungsrichtung des Mittelpunktes des oberen Öffnungsquerschnittes gekrümmt verläuft.

5. Küchenmaschine nach einem oder mehreren der vorhergehenden Ansprüche, dadurch gekennzeichnet, daß eine Innenwandfläche des Rührgefäßes (4) in einem Horizontalquerschnitt eine nach innen vorspringende Stufe (21) ausbildet.

6. Küchenmaschine nach Anspruch 5, dadurch gekennzeichnet, daß die Stufe (21) anderseitig flach auslaufend in die Wandung (23) übergeht.

7. Küchenmaschine nach Anspruch 5 oder 6, dadurch gekennzeichnet, daß die Stufe (21) in dem mittleren und oberen Bereich (b bzw. c) des Rührgefäßes (4) ausgebildet ist.

8. Küchenmaschine nach einem oder mehreren der vorhergehenden Ansprüche 5-7, dadurch gekennzeichnet, daß die Stufe (21) nur einseitig in dem Rührgefäß (4) ausgebildet ist.

## Claims

1. A food processor (1) having a mixing vessel (4) and a drive mechanism (2) for an agitator (6) in the mixing vessel (4), the mixing vessel (4) having, in its lower region (a), an opening cross-section which is circular in a horizontal plane, characterised in that the upper opening cross-section of the mixing vessel (4) in the horizontal plane is elliptical and that the geometric mid-point (19') of the upper opening cross-section is laterally offset from the geometric mid-point (19) of the lower opening cross-section in the direction of a horizontal axis (x).

2. A food processor according to Claim 1, a handle (5) being provided on the side of the mixing vessel (4), characterised in that the mid-point of the upper opening cross-section is further from the handle (5) than the mid-point of the lower opening cross-section.

3. A food processor according to Claim 1 or 2, characterised in that the cross-section of the opening is circular in the lower region (a) and in a middle region (b) of the mixing vessel (4), but is elliptical in the upper region (c).

4. A food processor according to one or more of the preceding claims, characterised in that a wall (23) of the mixing vessel (4) extends in a curved manner in a vertical section in the direction of offset of the mid-point of the upper opening cross-section.

5. A food processor according to one or more of the preceding claims, characterised in that an inner wall surface of the mixing vessel (4) embodies, in cross-section in a horizontal plane, an inwardly projecting step (21).

6. A food processor according to Claim 5, characterised in that the step (21) has a transition on the other side which runs out in a smooth manner into the wall (23).

7. A food processor according to Claim 5 or 6, characterised in that the step (21) is provided in the middle and upper region (b and c) of the mixing vessel (4).

8. A food processor according to one or more of the preceding Claims 5 - 7, characterised in that the step (21) is provided on one side only in the mixing vessel (4).

## Revendications

1. Robot ménager (1) comprenant un bac à agitation (4) et un système d'entraînement (2) d'un agitateur (6) dans le bac à agitation (4) qui présente dans sa zone inférieure (a) une section transversale d'ouverture horizontale de forme circulaire, caractérisé en ce que la section transversale horizontale d'ouverture du bac à agitation (4) est de forme ellipsoïdale, et en ce que le point géométrique médian (19') de la section transversale supérieure d'ouverture est décalé latéralement dans la direction d'un axe horizontal (x) par rapport au point géométrique médian (19) de la section transversale inférieure d'ouverture.

2. Robot ménager selon la revendication 1, dans lequel est prévu du côté du bac à agitation (4) une poignée de maintien (5), caractérisé en ce que le point médian de la section transversale supérieure d'ouverture de la poignée de maintien (5) est plus éloigné que le point médian de la section transversale inférieure d'ouverture.

3. Robot ménager selon la revendication 1 ou 2, caractérisé en ce que la section transversale d'ouverture dans la zone inférieure (a) et dans la zone médiane (b) du bac à agitation (4) est de forme circulaire, tout en étant cependant de forme ellipsoïdale dans la zone supérieure (c).

4. Robot ménager selon l'une ou plusieurs des revendications précédentes, caractérisé en ce qu'une paroi (23) du bac à agitation (4) présente une forme incurvée selon une coupe verticale, dans la direction de décalage du point médian de la section transversale supérieure d'ouverture.

5. Robot ménager selon l'une ou plusieurs des revendications précédentes, caractérisé en ce qu'une surface intérieure de paroi du bac à agitation (4) présente, dans une section transversale horizontale, un gradin (21) faisant saillie vers l'intérieur.

6. Robot ménager selon la revendication 5, caractérisé en ce que le gradin (21) se prolonge de l'autre côté par un raccordement à plat dans la paroi (23).

7. Robot ménager selon la revendication 5 ou 6, caractérisé en ce que le gradin (21) est formé dans la zone médiane et dans la zone supérieure (b ou c) du bac à agitation (4).

8. Robot ménager selon l'une ou plusieurs des revendications précédentes 5 à 7, caractérisé en ce que le gradin (21) est formé seulement d'un côté dans le bac à agitation (4).
